# EUROPÄISCHE PATENTSCHRIFT

(11) **EP 3 494 026 B1**
(45) Veröffentlichungstag und Bekanntmachung des Hinweises auf die Patenterteilung: **09.09.2020**
(21) Anmeldenummer: 17731913.4
(22) Anmeldetag: 22.06.2017
(51) Int. Cl.: B62D 1/16, B62D 25/14, B62D 25/08

(54) **LAGERUNGSANORDNUNG FÜR EINE LENKSÄULE EINES FAHRZEUGS UND FAHRZEUG MIT EINER DERARTIGEN LAGERUNGSANORDNUNG**
MOUNTING ARRANGEMENT FOR A STEERING COLUMN OF A VEHICLE AND VEHICLE WITH A MOUNTING ARRANGEMENT OF THIS TYPE
ENSEMBLE DE SUPPORT D'UNE COLONNE DE DIRECTION D'UN VÉHICULE ET VÉHICULE MUNI DUDIT ENSEMBLE DE SUPPORT

(30) Priorität: 04.08.2016 DE 102016214463
(43) Veröffentlichungstag der Anmeldung: 12.06.2019
(73) Patentinhaber: Volkswagen Aktiengesellschaft, 38440 Wolfsburg (DE)
(72) Erfinder: GREULICH, Sebastian, 38448 Wolfsburg (DE)
(86) Internationale Anmeldenummer: PCT/EP2017/065421
(87) Internationale Veröffentlichungsnummer: WO 2018/024402

(56) Entgegenhaltungen:
- EP-A1- 0 589 299
- DE-A1- 3 624 747
- DE-A1- 10 200 890
- US-A- 4 362 319

## Beschreibung

Die Erfindung betrifft ein Fahrzeug mit einer Lagerungsanordnung nach dem Oberbegriff des Patentanspruchs 1 der vorliegenden Patentanmeldung.

Für die Zwecke der nachfolgenden Beschreibung soll die übliche Fahrtrichtung eines Kraftfahrzeugs mit "-x" ("minus x"), die Richtung entgegen seiner üblichen Fahrtrichtung mit "+x" ("plus x"), ausgehend von der üblichen Fahrtrichtung (-x) die Richtung in der Horizontalen quer zur x-Richtung nach rechts gesehen mit "+y", ausgehend von der üblichen Fahrtrichtung (-x) die Richtung in der Horizontalen quer zur x-Richtung nach links gesehen mit "-y", die Richtung in der Vertikalen quer zur x-Richtung nach oben gesehen mit "+z", und die Richtung in der Vertikalen quer zur x-Richtung nach unten gesehen mit "-z" bezeichnet werden. Diese Bezeichnungsweise der Raumrichtungen in kartesischen Koordinaten entspricht dem in der Kraftfahrzeugindustrie allgemein verwendeten Koordinatensystem. Überdies werden Begriffe wie "orne", "hinten", "oben" "unten" sowie Begriffe mit ähnlichem Bedeutungsinhalt einschließlich der Begriffe "rechts" und "links" in der Weise verwendet, wie sie zur Richtungsbezeichnung an einem Kraftfahrzeug üblicherweise gebraucht werden.

Aus der DE 102 60 523 A1 ist eine Lenksäule bekannt, welche im Wesentlichen aus einem Lenkwellengehäuse und einer in demselben drehgelagerten Lenkwelle besteht und am Fahrzeugaufbau abgestützt ist. Um die Schwingungsneigung der Lenksäule zu minimieren, ist dieselbe unter Vermittlung eines sogenannten Lenkungsbocks am Fahrzeugaufbau abgestützt. Hierzu weist der Lenkungsbock an seinen axialen Endabschnitten zwei Konsolen auf, die ihrerseits Verstelleinrichtungen bilden. Diese erlauben eine Veränderung des Neigungswinkels sowie der Axiallage der Lenksäule in Bezug auf eine Längsachse derselben. Der obere Endabschnitt des Lenkungsbocks ist unmittelbar am Fahrzeugaufbau befestigt, wogegen der untere Endabschnitt über zwei Streben am Fahrzeugaufbau abgestützt ist.

Die DE 102 00 890 A1 beschreibt eine Lenkanordnung für ein Fahrzeug, insbesondere für ein Kraftfahrzeug, mit einem Querträger, an dem eine Lenksäule mittels einer Lenksäulenaufnahme festlegbar ist. Zur Vermeidung, zumindest jedoch zur Reduzierung eines sogenannten Lenkradzitterns ist zum einen eine Querträger-Abstützstrebe vorgesehen, die einenends mit dem Querträger verbindbar ist. Zum anderen ist eine Lenksäulen-Abstützstrebe vorgesehen, welche einenends mit der Lenksäule verbindbar ist. Die Querträger-Abstützstrebe und die Lenksäulen-Abstützstrebe sind jeweils anderenends in einem gemeinsamen Anbindungspunkt an ein Stirnwandteil angebunden.

Aus der US 4 362 319 A ist des Weiteren eine für eine Lenksäule eines Fahrzeugs geeignete Lagerungsanordnung mit einem innerhalb eines Fahrzeuginnenraums des Fahrzeugs verlaufenden Querträger, sowie mit einem in Fahrtrichtung des Fahrzeugs gesehen vor dem Querträger angeordneten Stirnwandteil bekannt, wobei eine Querträgerabstützstrebe vorgesehen ist, die den Querträger unter Vermittlung eines Verstärkungsteils, welches das Stirnwandteil lokal versteift, an besagtem Stirnwandteil abstützt. Die Lenksäule ist am Querträger und demgemäß unter Vermittlung der Querträgerabstützstrebe samt Verstärkungsteil ebenfalls an besagtem Stirnwandteil abgestützt.

Ferner sind Lagerungsanordnungen für eine Lenksäule eines Fahrzeugs aus der DE 100 29 814 A1, aus der DE 103 52 224 A1 und aus der DE 10 2004 051 182 A1 bekannt.

Aufgabe der Erfindung ist es, ein Fahrzeug, insbesondere Kraftfahrzeug, mit einer alternativen Lagerungsanordnung für eine Lenksäule des Fahrzeugs zu schaffen, vermittels derer Schwingungen in einem mit der Lenkwelle verbundenen Lenkrad wirkungsvoll gemindert werden.

Ausgehend von einem Fahrzeug mit einer Lagerungsanordnung für eine Lenksäule des Fahrzeugs, insbesondere eines Kraftfahrzeugs, welche Lagerungsanordnung einen innerhalb eines Fahrzeuginnenraums des Fahrzeugs verlaufenden Querträger, sowie einen in Fahrtrichtung des Fahrzeugs gesehen vor dem Querträger angeordneten Stirnwandteil aufweist, wobei eine Querträger-Abstützstrebe vorgesehen ist, die den Querträger an besagtem Stirnwandteil abstützt, und wobei die Lenksäule zum einen am Querträger und zum anderen unter Vermittlung einer Lenksäulen-Abstützstrebe am Stirnwandteil abgestützt ist, wird die gestellte Aufgabe dadurch gelöst, dass am Stirnwandteil fahrzeuginnenraumseitig ein Verstärkungsteil befestigt ist und sowohl die Querträger-Abstützstrebe als auch die Lenksäulen-Abstützstrebe unter Vermittlung des besagten Verstärkungsteils am Stirnwandteil abgestützt sind, dass die Querträger-Abstützstrebe und die Lenksäulen-Abstützstrebe zumindest eine gemeinsame Befestigungsstelle am Verstärkungsteil aufweisen, und dass die Querträger-Abstützstrebe über die Lenksäulen-Abstützstrebe am Verstärkungsteil abgestützt.

Durch diese Maßnahme wird vorteilhaft die Steifigkeit der Anbindungsstelle der Abstützstreben am Stirnwandteil erhöht, woraus eine besonders schwingungsarme Lagerung der Lenksäule resultiert. Dadurch, dass die Querträger-Abstützstrebe und die Lenksäulen-Abstützstrebe zumindest eine gemeinsame Befestigungsstelle am Verstärkungsteil aufweisen und die Lenksäulen-Abstützstrebe zwischen dem Verstärkungsteil und der Querträger-Abstützstrebe angeordnet ist, resultieren bei Beibehaltung der Vorteile des Standes der Technik, nämlich, dass an besagter gemeinsamer Befestigungsstelle angreifende Kräfte sich gegenseitig aufheben, auch Einsparungen an Material sowie Fertigungs- und Montagezeit. Darüber hinaus durch diese Maßnahme die Montage der erfindungswesentlichen Bauteile der in Rede stehenden Lagerungsanordnung sowie die Anordnung und Zentrierung derselben zueinander erleichtert.

Die Unteransprüche beschreiben bevorzugte Weiterbildungen oder Ausgestaltungen der Erfindung.

Bevorzugt ist das besagte Stirnwandteil durch einen an sich schon relativ steif ausgebildeten Wasserkasten gebildet. Unter einem Wasserkasten wird im Allgemeinen ein Bauteil an einem Fahrzeug, insbesondere an einem Kraftfahrzeug, verstanden, welches einen Spalt zwischen einer Fronthaube und einer Windschutzscheibe respektive Frontscheibe überbrückt. Der Wasserkasten dient unter anderem dazu, von der Windschutzscheibe ablaufendes Niederschlagswasser zu sammeln und abzuführen. Der besagt Querträger ist bevorzugt unterhalb der Windschutzscheibe des Fahrzeugs verlaufend angeordnet. Ist der besagte Wasserkasten fest mit der Stirnwand verbunden, indem derselbe eine Stirnwand des Fahrzeugs nach Fahrzeug-oben - demgemäß in Fahrzeughochrichtung (+Z-Richtung) - verlängert, oder bildet die Stirnwand selbst den Wasserkasten aus oder mit aus, ist die erfindungsgemäße Lagerungsanordnung als besonders steif einzuschätzen.

Wie die Erfindung noch vorsieht, ist die Querträger-Abstützstrebe durch ein sich in Fahrtrichtung oder Fahrzeuglängsrichtung (X-Richtung) erstreckendes Hohlprofil mit einem verstärkungsteilseitigen Anschlussflansch gebildet. Vermittels des besagten Hohlprofils wird bei Minimierung des Gewichts des Fahrzeugs eine besonders steife Anbindung des Querträgers an die Fahrzeugkarosserie bzw. an den Fahrzeugaufbau bewirkt. Insoweit ist gemäß einer bevorzugten Ausführungsform der Erfindung vorgesehen, dass das Hohlprofil durch einen ersten, oberen Hohlprofilabschnitt mit einem nach unten offenen U-Profilquerschnitt sowie einen zweiten, unteren Hohlprofilabschnitt mit einem nach oben offenem U-Profilquerschnitt gebildet ist, welche Hohlprofilabschnitte untereinander fest verbunden sind und ein im Querschnitt gesehen geschlossenes Hohlprofil ausbilden. Ein derartiges Hohlprofil lässt sich einfach und kostengünstig herstellen und montieren.

Was die Lenksäulen-Abstützstrebe anbelangt, weist diese ausgehend von der Lenksäule einen zumindest abschnittsweise schräg nach Fahrzeug-vorne-oben verlaufenden ersten Strebenabschnitt auf, der in einen zweiten Strebenabschnitt übergeht, welcher durch einen Befestigungsflansch der Lenksäulen-Abstützstrebe zur Anbindung derselben an das Verstärkungsteil gebildet ist. Durch diese Maßnahme werden die an der Lenksäule angreifenden Kräfte wirkungsvoll in die tragende Struktur des Fahrzeugs eingeleitet. In Weiterbildung der Erfindung ist im ersten Strebeabschnitt eine Knickstelle vorgesehen, welche sich als Sollknickstelle im Falle eines Crashereignisses vorteilhaft auf das Bewegungsverhalten der Lenksäule auswirkt.

Zur Abstützung und Befestigung der Lenksäule am Querträger sind bevorzugt zwei in Fahrzeugquerrichtung (Y-Richtung) gesehen nebeneinander angeordnete Befestigungsstellen vorgesehen, die weiter bevorzugt voneinander beabstandet sind, woraus auch eine besonders steife Anbindung der Lenksäule am Querträger resultiert.

Bevorzugt ist das Verstärkungsteil durch ein Hohlprofil gebildet, welches bei Einsparung von Material und Gewicht die gewünschte hohe Steifigkeit der Lagerungsanordnung gewährleistet. Bevorzugt ist das Hohlprofil im Querschnitt gesehen durch ein U-Profil gebildet, welches im Verbund mit dem Stirnwandteil ein im Querschnitt gesehen geschlossenes Hohlprofil ausbildet.

Nachstehend wird die Erfindung anhand eines in den Zeichnungen schematisch dargestellten Ausführungsbeispiels näher erläutert. Sie ist jedoch nicht auf dieses beschränkt, sondern erfasst alle durch die Patentansprüche definierten Ausgestaltungen. Es zeigen:
- Fig. 1: äußerst schematisch ein Fahrzeug, vorliegend ein Kraftfahrzeug, welches mit einer erfindungsgemäßen Lagerungsanordnung für eine Lenksäule des Fahrzeugs ausgestattet ist,
- Fig. 2: eine perspektivische Teilansicht der Rohbaukarosserie des Kraftfahrzeugs der Fig. 1 im Verbund mit besagter, erfindungsgemäß gelagerter Lenksäule sowie mit Blick auf eine Stirnwand samt Wasserkasten des Fahrzeugs,
- Fig. 3: eine äußerst schematische Schnittdarstellung der erfindungsgemäßen Lagerungsanordnung, und
- Fig. 4: die Lagerungsanordnung nach Fig. 3 in einer Aufsicht.

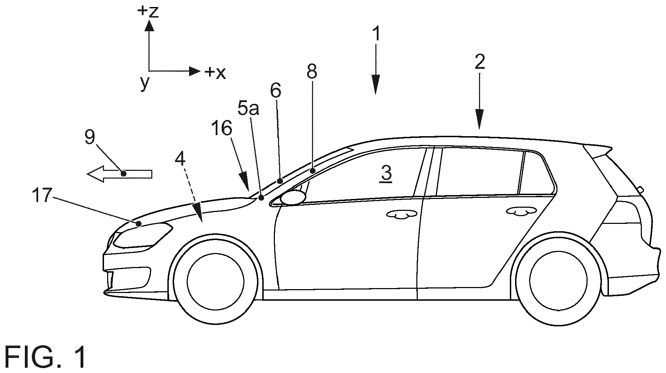

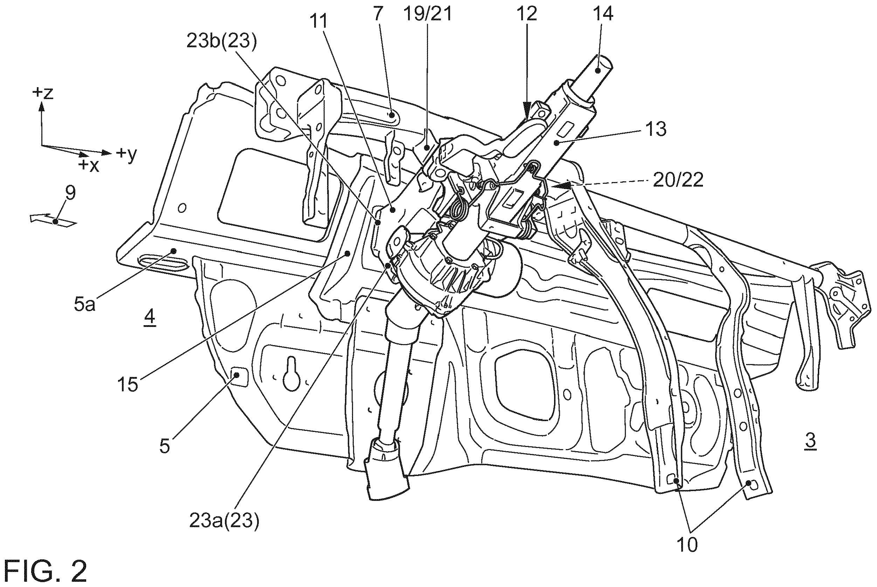

Das in Fig. 1 dargestellte Fahrzeug 1 (Kraftfahrzeug) weist einen Fahrzeugaufbau 2 auf, welcher seinerseits einen Fahrzeuginnenraum 3 und einen fahrzeugfrontseitig angeordneten Motorraum 4 ausbildet. Der Fahrzeuginnenraum 3 und der Motorraum 4 sind mittels einer in Fig. 2 gezeigten vorderen Stirnwand 5 voneinander separiert. Unterhalb einer in Fig. 1 dargestellten Windschutzscheibe 6 respektive Frontscheibe des Fahrzeugs 1 ist im besagten Fahrzeuginnenraum 3 ein in Fahrzeugquerrichtung (Y-Richtung) verlaufender Querträger 7 angeordnet, welcher beidenends an in Fig. 1 gezeigten vorderen Karosseriesäulen 8 (A-Säulen) des Fahrzeugs 1 abgestützt und an denselben befestigt ist. Die vordere Stirnwand 5 ist in Fahrtrichtung 9 des Fahrzeugs 1 gesehen demnach vor dem Querträger 7 angeordnet. Darüber hinaus stützt sich gemäß diesem Ausführungsbeispiel der besagte Querträger 7 mittels zugeordneter Stützelemente 10 an einem nicht zeichnerisch dargestellten Mitteltunnel des Fahrzeugaufbaus 2 ab.

Wie der Fig. 2 weiter zu entnehmen ist, schließt sich nach Fahrzeug-oben, demgemäß in Fahrzeughochrichtung (Z-Richtung), an die Stirnwand 5 ein Stirnwandteil 5a in Form eines Wasserkastens an, wodurch die Stirnwand 5 sozusagen nach oben verlängert ausgebildet ist. Das besagte Stirnwandteil 5a und die Stirnwand 5 bestehen bevorzugt aus Stahl und sind untereinander stoffschlüssig durch Schweißen gefügt. Mittels einer in Fahrzeuglängsrichtung (X-Richtung) verlaufenden Querträger-Abstützstrebe 11 ist der Querträger 7 ferner an dem besagten Stirnwandteil 5a abgestützt.

Des Weiteren zeigt Fig. 2 eine Lenksäule 12 mit einem Lenkwellengehäuse 13 und einer in demselben drehbar gelagerten Lenkwelle 14, welche an ihrem fahrzeuginnenraumseitigen Ende ein an sich bekanntes und demgemäß nicht zeichnerisch dargestelltes Lenkrad trägt. Mittels einem an sich bekannten und demgemäß nicht zeichnerisch dargestellten Kraftübertragungsmittel, welches die vordere Stirnwand 5 durch geeignete Öffnung oder Durchbrechung derselben hindurch durchsetzt, ist besagte Lenkwelle 14 anderenends mit einem an sich bekannten und der besseren Übersichtlichkeit halber ebenfalls nicht zeichnerisch dargestellten, innerhalb des Motorraums 4 angeordneten Lenkgetriebe wirkverbunden.

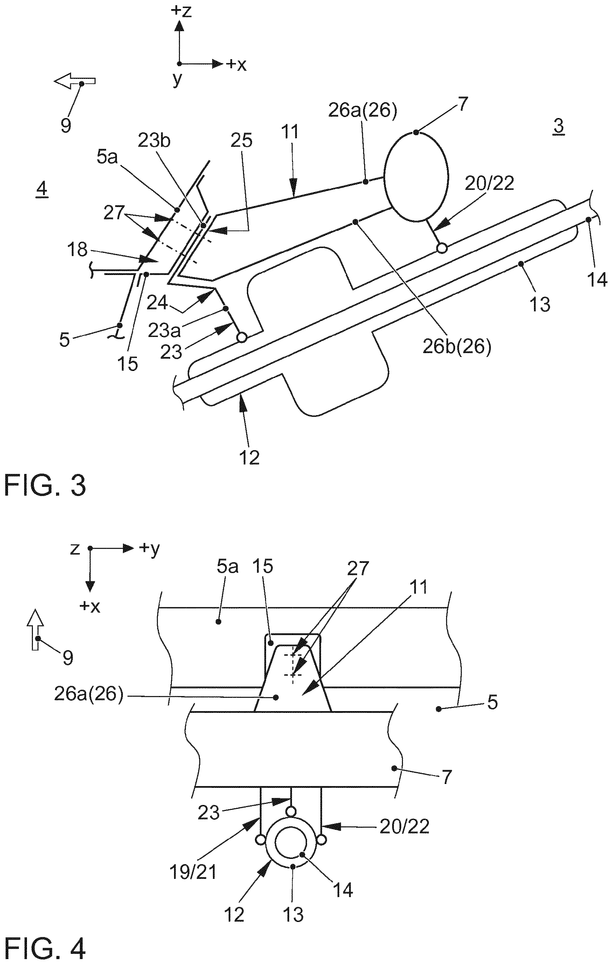

Wie den Fig. 2 bis 4 zu entnehmen ist, weist das Stirnwandteil 5a in Form des Wasserkastens fahrzeuginnenraumseitig ein Verstärkungsteil 15 auf, welches am Stirnwandteil 5a respektive Wasserkasten befestigt ist. Wie bereits oben dargetan, überbrückt der Wasserkasten einen in Fig. 1 mit dem Bezugszeichen 16 versehenen Spalt zwischen einer Fronthaube 17 und der Windschutzscheibe 6 des Fahrzeugs 1. Wie insbesondere den Fig. 3 und 4 noch zu entnehmen ist, ist das Verstärkungsteil 15 im Querschnitt gesehen durch ein Hohlprofil in Form eines U-Profils gebildet, welches im Verbund mit dem Stirnwandteil 5a ein im Querschnitt gesehen geschlossenes Hohlprofil 18 ausbildet. Das Verstärkungsteil 15 besteht bevorzugt ebenfalls aus Stahl und ist weiter bevorzugt mit dem Stirnwandteil 5a ebenfalls stoffschlüssig durch Schweißen verbunden.

Darüber hinaus ist aus den Fig. 3 und 4 ersichtlich, dass die Lenksäule 12 in einem oberen Abschnitt derselben mittels zweier in Fahrzeugquerrichtung (Y-Richtung) gesehen beabstandet voneinander angeordneter Befestigungsstellen 19, 20 annähernd unmittelbar mit dem Querträger 7 verbunden ist. Die Befestigungsstellen 19, 20 sind vorliegend durch Lagerböcke 21, 22 gebildet (vgl. insbes. Fig. 2), die eine weitestgehend starre Verbindung zwischen der Lenksäule 12 respektive dem Lenkwellengehäuse 13 derselben und dem Querträger 7 bewirken.

In einem unteren Abschnitt der Lenksäule 12 weist dieselbe eine Lenksäulen-Abstützstrebe 23 auf, welche gemäß einer in Fig. 2 gezeigten ersten Ausführungsvariante der Erfindung ausgehend von der Lenksäule 12 bzw. deren Lenkwellengehäuse 13 einen schräg nach Fahrzeug-vorne-oben verlaufenden ersten Strebenabschnitt 23a aufweist, der in einen zweiten Strebenabschnitt 23b übergeht und durch einen abgewinkelten Befestigungsflansch zur Anbindung der Lenksäulen-Abstützstrebe 23 an das Verstärkungsteil 15 gebildet ist. Fig. 3 zeigt demgegenüber eine zweite Ausführungsvariante der Lenksäulen-Abstützstrebe 23, wonach der erste Strebenabschnitt 23a zusätzlich eine Knickstelle 24 aufweist, die sich als Sollknickstelle im Falle eines Crashereignisses auf das Bewegungsverhalten der Lenksäule 12 auswirkt.

Der zweite, als Befestigungsflansch ausgebildete Strebenabschnitt 23b der Lenksäulen-Abstützstrebe 23 stützt sich fahrzeuginnenraumseitig unmittelbar am Verstärkungsteil 15 ab. Über den besagten zweiten Strebenabschnitt 23b stützt sich wiederum die Querträger-Abstützstrebe 11 mit einem verstärkungsteilseitigen Anschlussflansch 25 am Verstärkungsteil 15 ab. Der besagte Anschlussflansch 25 stellt sozusagen einen Schließflansch eines die Querträger-Abstützstrebe 11 ausbildenden Hohlprofils 26 dar. Vorliegend ist dieses Hohlprofil 26 durch einen sich in Fahrzeuglängsrichtung (X-Richtung) erstreckenden ersten, oberen Hohlprofilabschnitt 26a mit einem nach unten offenen U-Profilquerschnitt und einen sich in Fahrzeuglängsrichtung (X-Richtung) erstreckenden zweiten, unteren Hohlprofilabschnitt 26b mit einem nach oben offenen U-Profilquerschnitt gebildet. Die Hohlprofilabschnitte 26a, 26b sind untereinander durch Verschweißen fest verbunden und bilden so ein im Querschnitt gesehen geschlossenes Hohlprofil 26 aus.

Die Querträger-Abstützstrebe 11 und die Lenksäulen-Abstützstrebe 23 weisen eine gemeinsame Befestigungsstelle 27 am Verstärkungsteil 15 auf, welche vorliegend durch zwei äußerst schematisch dargestellte, übereinander angeordnete Schraubstellen mit jeweils koaxial hintereinander im Verstärkungsteil 15, im zweiten, als Befestigungsflansch ausgebildeten Strebenabschnitt 23b der Lenksäulen-Abstützstrebe 23 und im Anschlussflansch 25 der Querträger-Abstützstrebe 11 angeordneten Bohrungen, die von je einer nicht zeichnerisch dargestellten Befestigungsschraube durchsetzt sind, gebildet sind.

### Bezugszeichenliste

- 1: Fahrzeug, insbesondere Kraftfahrzeug
- 2: Fahrzeugaufbau
- 3: Fahrzeuginnenraum
- 4: Motorraum
- 5: Stirnwand
- 5a: Stirnwandteil, insbesondere Wasserkasten
- 6: Windschutzscheibe
- 7: Querträger
- 8: Karosseriesäulen
- 9: Fahrtrichtung
- 10: Stützelement
- 11: Querträger-Abstützstrebe
- 12: Lenksäule
- 13: Lenkwellengehäuse
- 14: Lenkwelle
- 15: Verstärkungsteil
- 16: Spalt
- 17: Fronthaube
- 18: Hohlprofil (Verstärkungsteil 15)
- 19: Befestigungsstelle
- 20: Befestigungsstelle
- 21: Lagerbock
- 22: Lagerbock
- 23: Lenksäulen-Abstützstrebe
- 23a: erster Strebenabschnitt
- 23b: zweiter Strebenabschnitt
- 24: Knickstelle
- 25: Anschlussflansch (Querträger-Abstützstrebe 11)
- 26: Hohlprofil (Querträger-Abstützstrebe 11)
- 26a: oberer Hohlprofilabschnitt
- 26b: unterer Hohlprofilabschnitt
- 27: Befestigungsstelle

## Patentansprüche

1. Fahrzeug (1), mit einer Lagerungsanordnung für eine Lenksäule (12) des Fahrzeugs (1), welche Lagerungsanordnung einen innerhalb eines Fahrzeuginnenraums (3) des Fahrzeugs (1) verlaufenden Querträger (7), sowie einen in Fahrtrichtung (9) des Fahrzeugs (1) gesehen vor dem Querträger (7) angeordneten Stirnwandteil (5a) aufweist, wobei eine Querträger-Abstützstrebe (11) vorgesehen ist, die den Querträger (7) an besagtem Stirnwandteil (5a) abstützt, und wobei die Lenksäule (12) zum einen am Querträger (7) und zum anderen unter Vermittlung einer Lenksäulen-Abstützstrebe (23) am Stirnwandteil (5a) abgestützt ist, **dadurch gekennzeichnet, dass** am Stirnwandteil (5a) fahrzeuginnenraumseitig ein Verstärkungsteil (15) befestigt ist und sowohl die Querträger-Abstützstrebe (11) als auch die Lenksäulen-Abstützstrebe (23) unter Vermittlung des besagten Verstärkungsteils (15) am Stirnwandteil (5a) abgestützt sind, dass die Querträger-Abstützstrebe (11) und die Lenksäulen-Abstützstrebe (23) zumindest eine gemeinsame Befestigungsstelle (27) am Verstärkungsteil (15) aufweisen, und dass die Querträger-Abstützstrebe (11) über die Lenksäulen-Abstützstrebe (23) am Verstärkungsteil (15) abgestützt ist.

2. Fahrzeug (1) nach dem vorhergehenden Anspruch, **dadurch gekennzeichnet, dass** das Stirnwandteil (5a) durch einen Wasserkasten gebildet ist.

3. Fahrzeug (1) nach einem der vorhergehenden Ansprüche, **dadurch gekennzeichnet, dass** die Querträger-Abstützstrebe (11) durch ein sich in Fahrtrichtung (9) oder Fahrzeuglängsrichtung (X-Richtung) erstreckendes Hohlprofil (26) mit einem verstärkungsteilseitigen Anschlussflansch (25) gebildet ist.

4. Fahrzeug (1) nach Anspruch 3, **dadurch gekennzeichnet, dass** das Hohlprofil (26) durch einen ersten, oberen Hohlprofilabschnitt (26a) mit einem nach unten offenen U-Profilquerschnitt sowie einen zweiten, unteren Hohlprofilabschnitt (26b) mit einem nach oben offenem U-Profilquerschnitt gebildet ist, welche Hohlprofilabschnitte (26a, 26b) untereinander fest verbunden sind und ein im Querschnitt gesehen geschlossenes Hohlprofil (26) ausbilden.

5. Fahrzeug (1) nach einem der vorhergehenden Ansprüche, **dadurch gekennzeichnet, dass** die Lenksäulen-Abstützstrebe (23) ausgehend von der Lenksäule (12) zumindest abschnittsweise einen schräg nach Fahrzeug-vorne-oben verlaufenden ersten Strebenabschnitt (23a) aufweist, der in einen zweiten Strebenabschnitt (23b) übergeht, welcher durch einen Befestigungsflansch der Lenksäulen-Abstützstrebe (23) zur Anbindung derselben an das Verstärkungsteil (15) gebildet ist.

6. Fahrzeug (1) nach Anspruch 5, **dadurch gekennzeichnet, dass** der erste Strebenabschnitt (23a) eine Knickstelle (24) aufweist.

7. Fahrzeug (1) nach einem der vorhergehenden Ansprüche, **dadurch gekennzeichnet, dass** zur Abstützung und Befestigung der Lenksäule (12) am Querträger (7) zwei in Fahrzeugquerrichtung (Y-Richtung) gesehen nebeneinander angeordnete Befestigungsstellen (19, 20) vorgesehen sind.

8. Fahrzeug (1) nach Anspruch 7, **dadurch gekennzeichnet, dass** besagte Befestigungsstellen (19, 20) voneinander beabstandet sind.

9. Fahrzeug (1) nach einem der vorhergehenden Ansprüche, **dadurch gekennzeichnet, dass** das Verstärkungsteil (15) durch ein Hohlprofil gebildet ist.

10. Fahrzeug (1) nach Anspruch 9, **dadurch gekennzeichnet, dass** das Hohlprofil im Querschnitt gesehen durch ein U-Profil gebildet ist, welches im Verbund mit dem Stirnwandteil (5a) ein im Querschnitt gesehen geschlossenes Hohlprofil (18) ausbildet.

## Claims

1. Vehicle (1) having a mounting arrangement for a steering column (12) of the vehicle (1), which mounting arrangement has a crossmember (7) running inside an interior (3) of the vehicle (1), as well as a bulkhead part (5a), which is arranged in front of the crossmember (7) as viewed in the direction of travel (9) of the vehicle (1), wherein a crossmember support strut (11) is provided which supports the crossmember (7) on said bulkhead part (5a), and wherein the steering column (12) is firstly supported on the crossmember (7) and secondly on the bulkhead part (5a) with the interposition of a steering column support strut (23), **characterized in that** a reinforcing part (15) is fastened to the bulkhead part (5a) on the interior side of the vehicle and both the crossmember support strut (11) and the steering column support strut (23) are supported on the bulkhead part (5a) with the interposition of said reinforcing part (15), **in that** the crossmember support strut (11) and the steering column support strut (23) have at least one common fastening point (27) on the reinforcing part (15), and **in that** the crossmember support strut (11) is supported on the reinforcing part (15) via the steering column support strut (23).

2. Vehicle (1) according to the preceding claim, **characterized in that** the bulkhead part (5a) is formed by a plenum chamber.

3. Vehicle (1) according to one of the preceding claims, **characterized in that** the crossmember support strut (11) is formed by a hollow profile (26) which extends in the direction of travel (9) or the longitudinal direction of the vehicle (X direction) and has a connecting flange (25) on the reinforcing-part side.

4. Vehicle (1) according to claim 3, **characterized in that** the hollow profile (26) is formed by a first, upper hollow profile segment (26a) having a U profile cross section open downward and by a second, lower hollow profile segment (26b) having a U profile cross section open upward, which hollow profile segments (26a, 26b) are firmly connected to one another and form a hollow profile (26) which is closed as viewed in cross section.

5. Vehicle (1) according to one of the preceding claims, **characterized in that** the steering column support strut (23), starting from the steering column (12), has, at least in segments, a first strut segment (23a) which extends at an angle to the top front of the vehicle and merges into a second strut segment (23b) which is formed by a fastening flange of the steering column support strut (23) for attaching the same to the reinforcing part (15).

6. Vehicle (1) according to Claim 5, **characterized in that** the first strut segment (23a) has a bend (24).

7. Vehicle (1) according to one of the preceding claims, **characterized in that** two fastening points (19, 20) arranged next to one another as viewed in the transverse direction of the vehicle (Y direction) are provided for supporting and fastening the steering column (12) to the crossmember (7).

8. Vehicle (1) according to claim 7, **characterized in that** said fastening points (19, 20) are spaced apart from each other.

9. Vehicle (1) according to one of the preceding claims, **characterized in that** the reinforcing part (15) is formed by a hollow profile.

10. Vehicle (1) according to claim 9, **characterized in that** the hollow profile, as viewed in cross section, is formed by a U profile which, in combination with the bulkhead part (5a), forms a hollow profile (18) which is closed as viewed in cross section.

## Revendications

1. Véhicule (1), comprenant un ensemble de support d'une colonne de direction (12) du véhicule (1), lequel ensemble de support présente une traverse (7) s'étendant à l'intérieur d'un habitacle (3) du véhicule (1), ainsi qu'une partie de paroi avant (5a) disposée devant la traverse (7) vue dans la direction de déplacement (9) du véhicule (1), dans lequel une entretoise d'appui de traverse (11) est prévue, qui supporte la traverse (7) sur ladite partie de paroi avant (5a) et dans lequel la colonne de direction (12) est supportée sur la partie de paroi avant (5a) d'une part au niveau de la traverse (7) et d'autre part par l'intermédiaire d'une entretoise d'appui de colonne de direction (23), **caractérisé en ce que**, sur la partie de paroi avant (5a), côté habitacle, une partie de renfort (15) est fixée et l'entretoise d'appui de traverse (11) tout comme l'entretoise d'appui de colonne de direction (23) sont supportées sur la partie de paroi avant (5a) par l'intermédiaire de ladite partie de renfort (15), que l'entretoise d'appui de traverse (11) et l'entretoise d'appui de colonne de direction (23) présentent au moins un point de fixation commun (27) sur la partie de renfort (15) et que l'entretoise d'appui de traverse (11) est supportée par le biais de l'entretoise d'appui de colonne de direction (23) sur la partie de renfort (15).

2. Véhicule (1) selon la revendication précédente, **caractérisé en ce que** la partie de paroi avant (5a) est formée par un caisson d'eau.

3. Véhicule (1) selon l'une des revendications précédentes, **caractérisé en ce que** l'entretoise d'appui de traverse (11) est formée par un profilé creux (26) s'étendant dans la direction de déplacement (9) ou la direction longitudinale du véhicule (direction X) avec une bride de raccordement (25) côté partie de renfort.

4. Véhicule (1) selon la revendication 3, **caractérisé en ce que** le profilé creux (26) est formé par une première section de profilé creux supérieure (26a) avec une section transversale de profilé en U ouvert vers le bas ainsi qu'une deuxième section de profilé creux inférieure (26b) avec une section transversale de profilé en U ouvert vers le haut, lesquelles sections de profilé creux (26a, 26b) sont reliées à demeure l'une à l'autre et forment un profilé creux (26) fermé lorsqu'il est vu en section transversale.

5. Véhicule (1) selon l'une des revendications précédentes, **caractérisé en ce que** l'entretoise d'appui de colonne de direction (23), à partir de la colonne de direction (12), présente au moins par section une première section d'entretoise (23a) s'étendant obliquement vers la partie supérieure avant de véhicule, qui effectue une transition dans une deuxième section d'entretoise (23b), qui est formée par une bride de fixation de l'entretoise d'appui de colonne de direction (23) pour liaison de celle-ci avec la partie de renfort (15).

6. Véhicule (1) selon la revendication 5, **caractérisé en ce que** la première section d'entretoise (23a) présente un point d'inflexion (24).

7. Véhicule (1) selon l'une des revendications précédentes, **caractérisé en ce que**, pour le support et la fixation de la colonne de direction (12) sur la traverse (7), deux points de fixation (19, 20) disposés l'un à côté de l'autre lorsqu'ils sont vus dans la direction transversale de véhicule (direction Y) sont prévus.

8. Véhicule (1) selon la revendication 7, **caractérisé en ce que** lesdits points de fixation (19, 20) sont espacés l'un de l'autre.

9. Véhicule (1) selon l'une des revendications précédentes, **caractérisé en ce que** la partie de renfort (15) est formée par un profilé creux.

10. Véhicule (1) selon la revendication 9, **caractérisé en ce que** le profilé creux est formé, vu en section transversale, par un profilé en U, qui forme, en liaison avec la partie de paroi avant (5a), un profilé creux fermé (18) lorsqu'il est vu en section transversale.
